# FASCICULE DE BREVET EUROPEEN

(11) **EP 0 679 553 B1**
(45) Date de publication et mention de la délivrance du brevet: **15.07.1998**
(21) Numéro de dépôt: 95400956.9
(22) Date de dépôt: 27.04.1995
(51) Int. Cl.: B60Q 1/04

(54) **Ensemble pour la fixation ajustable selon trois dimensions d'un dispositif d'éclairage et/ou de signalisation de véhicule automobile**
Dreidimensional justierbare Befestigungseinrichtung für Beleuchtung- oder Signaleinrichtung eines Fahrzeugs
Three dimensionally adjustable fixation device for a lighting or signaling vehicle device

(30) Priorité: 28.04.1994 FR 9405158
(43) Date de publication de la demande: 02.11.1995
(73) Titulaire: VALEO VISION, 93000 Bobigny (FR)
(72) Inventeur: Berton, Jaques, F-77186 Noisiel (FR); Bolis, Jean, F-93470 Coubron (FR)
(74) Mandataire: Martin, Jean-Jacques

(56) Documents cités:
- EP-A- 0 239 440
- EP-A- 0 459 187
- DE-A- 4 228 889
- DE-C- 3 540 724

## Description

La présente invention est relative à un ensemble de fixation permettant d'assembler de façon ajustable selon trois dimensions, un dispositif d'éclairage et/ou de signalisation de véhicule automobile par rapport à la carrosserie de ce véhicule.

Pour des raisons d'esthétique, les constructeurs de véhicules automobiles cherchent depuis plusieurs années à intégrer les feux de signalisation et les projecteurs par rapport aux carrosseries, de façon que les voyants et les glaces soient "filants", leurs faces extérieures étant dans le prolongement exact des faces extérieures des portions environnantes des carrosseries.

Il a déjà été proposé par la Demanderesse dans son brevet français publié sous le numéro 2 594 761 un dispositif qui permet de fixer une zone d'attache d'un boîtier de projecteur, par rapport à une zone d'attache de carrosserie en ajustant la distance entre ce boîtier et la carrosserie. Ce dispositif comprend principalement un fourreau solidaire du boîtier du projecteur, ainsi qu'un coulisseau engagé dans ledit fourreau. L'ensemble constitué par le fourreau et le coulisseau est vissé sur un point d'attache de la carrosserie du véhicule. La position du coulisseau dans le fourreau est ajustée lors du montage puis verrouillée par un organe élastique porté par le coulisseau et que le serrage de la vis déforme pour qu'il vienne en prise avec le fourreau.

Avec un tel dispositif, le réglage du boîtier par rapport à la carrosserie n'est réglable que selon l'axe de déplacement relatif du coulisseau et du fourreau.

Un but de la présente invention est de proposer un ensemble de fixation qui permette un réglage selon trois dimensions de la position relative des zones d'attache respectives du boîtier et de la carrosserie qu'il assemble.

Un autre but de l'invention est de proposer un ensemble de fixation de ce type qui soit de réalisation et de mise en oeuvre simples.

On connaît déjà par EP-A-0 459 187 un ensemble pour la fixation ajustable d'un dispositif d'éclairage et/ou de signalisation sur la carrosserie d'un véhicule automobile, comportant deux éléments susceptibles de se déplacer l'un par rapport à l'autre le long d'un axe de coulissement commun, lesdits éléments étant l'un solidaire du dispositif d'éclairage et/ou de signalisation, l'autre fixé sur une tôle de la carrosserie par un organe fileté qui traverse la tôle et qui coopére avec un écrou pour serrer ladite tôle entre ledit écrou et un appui complémentaire, ledit organe fileté traversant ladite tôle avec un jeu qui autorise l'ajustement transversal de la position de l'axe de coulissement desdits éléments par rapport à la tôle de la carrosserie, des moyens permettant de bloquer lesdits éléments l'un par rapport à l'autre dans une position relative correspondant à un ajustement souhaité selon la direction de l'axe de coulissement comportant un écrou coopérant avec un deuxième organe fileté s'étendant selon l'axe de coulissement relatif des deux éléments.

L'invention propose quant à elle un ensemble caractérisé en ce que l'organe fileté qui traverse avec jeu la tôle est un fourreau qui constitue l'un des éléments ajustables en coulissement, le deuxième organe fileté étant une vis s'étendant axialement par rapport audit fourreau, la tête de ladite vis étant en appui sur la tranche dudit fourreau qui est du côté de la tôle opposé au dispositif d'éclairage et/ou de signalisation, le deuxième élément étant un écrou qui coopère avec ladite vis.

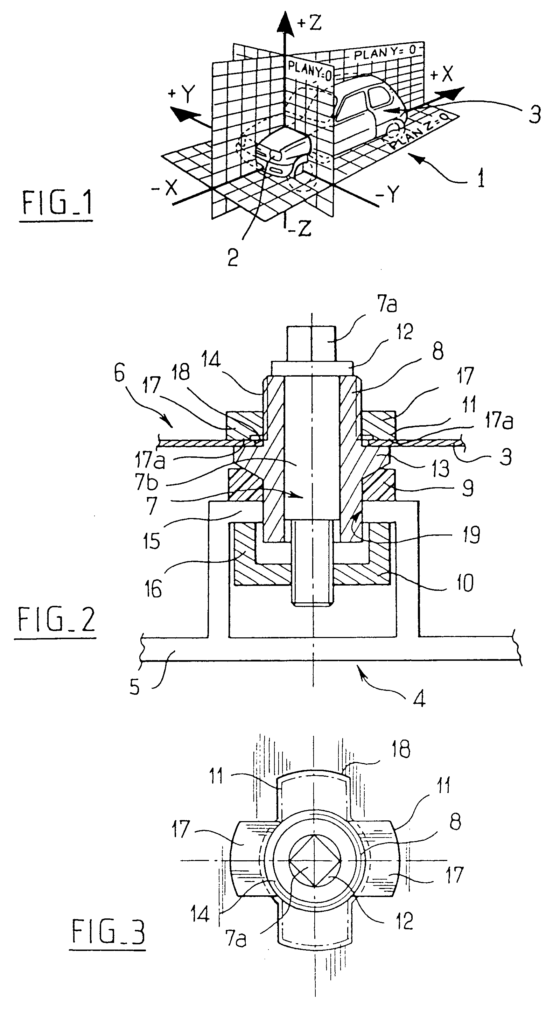

D'autres caractéristiques et avantages de l'invention ressortiront encore de la description qui suit de plusieurs modes de réalisation. Cette description est purement illustrative et non limitative. Elle doit être lue en regard des dessins annexés sur lesquels :
- on a porté sur la figure 1, qui représente schématiquement en perspective un véhicule automobile, les axes selon lesquels les ensembles de fixation selon l'invention permettent un ajustement de la position des feux de ce véhicule ;
- la figure 2 est une vue en coupe axiale d'un ensemble de fixation conforme à un premier mode de réalisation particulier possible pour l'invention ;
- la figure 3 est une vue de dessus de l'ensemble de la figure 2 ;
- la figure 4 est une vue en coupe axiale d'un ensemble conforme à un deuxième mode particulier de réalisation possible pour l'invention ;
- la figure 5 est une vue de dessus de l'ensemble de la figure 4 ;
- les figures 6 et 7 sont des vues en coupe axiale de deux variantes possibles de l'ensemble des figures 2 et 3 ;
- la figure 8 est une vue en coupe axiale d'une variante possible de l'ensemble des figures 4 et 5.

Le véhicule automobile représenté sur la figure 1 a été référencé par 1 dans son ensemble ; ses projecteurs avant et sa carrosserie ont été respectivement référencés par 2 et 3. Un feu 2 est assemblé à la carrosserie 3 par plusieurs points d'attache.

Les ensembles de fixation selon l'invention qui vont maintenant être décrits, permettent un ajustement selon trois dimensions des zones d'attache des projecteurs 2 par rapport aux zones d'attache correspondantes de la carrosserie 3. Les axes XX, YY et ZZ auxquels il sera fait référence dans toute la suite du texte sont les axes du véhicule qui sont représentés sur la figure 1, l'axe ZZ étant vertical lorsque le véhicule est porté par un sol horizontal, les axes XX et YY étant perpendiculaires.

L'ensemble représenté sur les figures 2 et 3 permet la fixation d'une zone d'attache 4 d'un boîtier 5 de feu de véhicule automobile, sur une zone d'attache 6 de la carrosserie 3. Cet ensemble comporte principalement une vis 7, un fourreau 8 traversé par la vis 7, une bague en un matériau élastomère 9, ainsi que deux écrous 10 et 11.

La tête 7a de la vis 7 est de type carré. Elle présente une collerette annulaire plate 12 par laquelle ladite vis 7 est en appui sur une tranche d'extrémité du fourreau 8. Le corps 7b de la vis 7 est d'un diamètre légèrement inférieur au diamètre intérieur du fourreau 8. Il se termine par une portion filetée qui débouche du fourreau 8, lorsque ladite vis est en place sur celui-ci. Cette portion filetée est destinée à coopérer avec l'écrou 10.

Le fourreau 8 est tubulaire et cylindrique. Il présente au voisinage de sa hauteur médiane une collerette annulaire 13, dont une face est un méplat destiné à venir en appui sur la tôle 3 et dont la face opposée est tronconique.

La portion du fourreau 8 qui s'étend à partir dudit méplat jusqu'à la tranche du fourreau 8 sur laquelle porte la collerette 12, présente un filetage extérieur 14 destiné à coopérer avec le filetage intérieur de l'écrou 11.

La bague 9 est destinée à être passée sur l'autre portion du fourreau 8 et à s'interposer entre la collerette 13 et une paroi, référencée par 15, du boîtier 5. La bague 9 présente à cet effet une face plate destinée à venir en appui sur la paroi 15, et une face tronconique opposée à sa face plate et complémentaire de la face tronconique de la collerette 13.

L'écrou 10 présente une jupe cylindrique 16 qui l'entoure à sa périphérie et par laquelle il vient en appui sur la face de la paroi 15 qui est opposée à celle qui reçoit la bague 9. Le diamètre intérieur de cette jupe 16 est supérieur au diamètre extérieur du fourreau 8.

L'écrou 11 est de forme oblongue. Il présente deux oreilles 17 diamétralement opposées, chacune de ces oreilles présentant une patte 17a en saillie par rapport à la face de l'écrou 11 qui est destinée à être en regard de la tôle de la carrosserie, ledit écrou 11 venant en appui sur ladite tôle, par l'intermédiaire de ces deux pattes 17a.

Sur cette portion 6 de la carrosserie est ménagée une ouverture 18, dont le contour correspond sensiblement à celui de l'écrou 11. Les dimensions de cette ouverture 18 sont légèrement supérieures à celles de l'écrou 11. La portion du fourreau 8 qui porte le filetage 14 est destinée à traverser avec jeu cette ouverture 18.

La paroi 15 du boîtier 5 présente une ouverture 19 circulaire, que traverse le fourreau 8. Cette ouverture 19 est d'un diamètre intérieur qui correspond sensiblement au diamètre extérieur du fourreau 8.

La fixation des zones d'attache 4 et 6 à l'aide de l'ensemble qui vient d'être décrit, s'effectue de la façon suivante.

L'écrou 10 étant initialement mis en place dans le boîtier 5, on introduit la vis 7 dans le fourreau 8 et l'on place la bague 9 sur celui-ci. La collerette 12 est alors en appui sur la tranche qui termine la portion du fourreau 8 qui présente le filetage 14. On place également l'écrou 11 sur le filetage 14.

L'ensemble constitué par la vis 7, le fourreau 8 et l'écrou 11 est introduit à travers l'ouverture 18, dans la position représentée en traits mixtes sur la figure 3, de façon que la collerette 13 vienne en appui par son méplat sur la tôle de la carrosserie 3. La zone 4 d'attache du boîtier est présentée par rapport à la zone 6, de façon que le fourreau 8 et la vis 7 soient passés à travers l'ouverture 19.

En tournant la vis 7, l'opérateur fait remonter l'écrou 10 par rapport au corps 7b de celle-ci. La jupe 16 dudit écrou 10 vient en appui sur la paroi 15. Celle-ci remonte également par rapport au corps de la vis 7 et à la zone d'attache 6 et écrase la bague 9 qui se déforme élastiquement.

On ajuste la position des zones d'attache 4 et 6 par rapport à l'axe ZZ (parallèle à l'axe de la vis 7) en jouant sur l'écrasement de la bague 9.

Le réglage de la position des zones d'attache 4 et 6 selon les deux autres dimensions se fait grâce au jeu qui existe entre le fourreau 8 et le contour de l'ouverture 18.

Lorsque l'opérateur estime que la zone d'attache 4 est convenablement positionnée par rapport à la zone d'attache 6 de la carrosserie, il tourne l'écrou 11 d'un quart de tour. Celui-ci vient alors serrer, avec la collerette 13, la tôle de la carrosserie, ainsi que représenté sur les figures 2 et 3.

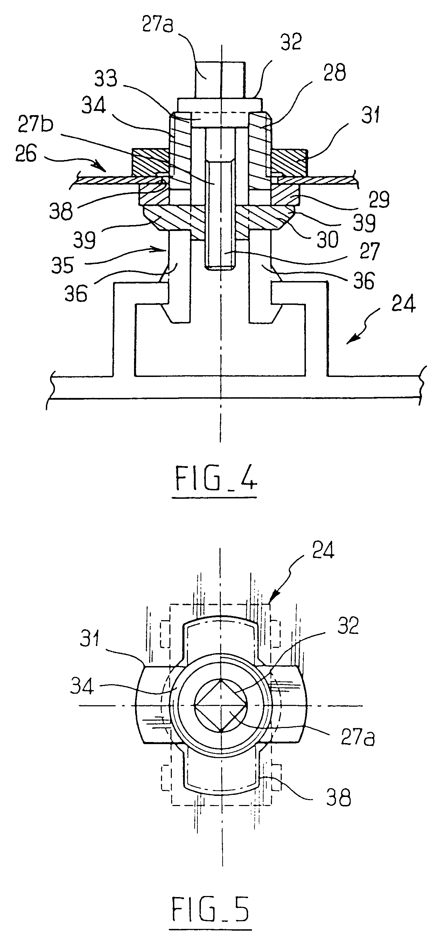

On se réfère maintenant plus particulièrement aux figures 4 et 5 sur lesquelles a été représenté un ensemble de fixation conforme à un deuxième mode de réalisation possible pour l'invention. La zone d'attache du boîtier du feu fixé par cet ensemble a été référencée par 24 ; la zone d'attache de la tôle de la carrosserie a été référencée par 26.

L'ensemble de fixation représenté sur ces figures comporte principalement un fourreau 28 traversé par une vis 27, ainsi que deux écrous 30, 31 et une rondelle 29.

L'écrou 31 est analogue à l'écrou 11.

La zone d'attache 26 de la carrosserie présente une ouverture 38 semblable à l'ouverture 18.

La tête 27a de la vis 27 est de type carré et présente une collerette 32. Le corps 27b de la vis est d'un diamètre inférieur au diamètre intérieur du fourreau 28. Il présente au voisinage de la collerette 32 une portion 33 assurant son centrage sur ledit fourreau 28.

Le fourreau 28 est constitué d'une première portion présentant un filetage extérieur 34 et d'une deuxième portion 35 présentant deux ouvertures 36 s'étendant longitudinalement sur le fourreau 28, à partir de la première portion 34, jusqu'à la zone d'attache 24 du boîtier, avec laquelle le fourreau 28 est moulé d'une pièce. Ces deux ouvertures 36 sont diamétralement opposées sur le fourreau 28.

Le corps de l'écrou 30 est d'un diamètre extérieur qui correspond au diamètre intérieur du fourreau 28. Cet écrou 30 présente deux oreilles 39 diamétralement opposées, destinées à s'étendre respectivement chacune dans l'une des ouvertures 36, ces oreilles 39 étant de dimensions complémentaires de celles desdites ouvertures 36.

La rondelle 29 est d'un diamètre intérieur qui correspond au diamètre extérieur du fourreau 28.

Cet ensemble de fixation s'utilise de la façon qui va maintenant être décrite.

L'écrou 30 est introduit sur le fourreau 28 de façon que ses oreilles 39 s'étendent à travers les ouvertures 36. L'opérateur place ensuite la vis 27 dans le fourreau 28, et la tourne autour de son axe de façon que son filetage vienne en prise avec celui de l'écrou 30. La rondelle 29 étant passée sur le fourreau 28, l'opérateur place également l'écrou 31 sur le filetage 34, puis présente l'ensemble ainsi assemblé sur l'ouverture 38, l'écrou 31 étant dans sa position représentée en traits mixtes sur la figure 5.

La rondelle 29 étant appuyée par l'écrou 30 sur la tôle de la zone d'attache 26, l'opérateur ajuste la position de la zone 24 par rapport à ladite zone 26, selon l'axe de la vis 27 (qui est parallèle à l'axe ZZ), en tournant ladite vis par rapport au fourreau 28 et ainsi que par rapport à l'écrou 30 maintenu par les oreilles 39 sur ledit fourreau, de façon à translater ledit écrou 30 par rapport au fourreau 28 dans un sens ou un autre.

Le réglage selon les deux autres axes s'effectue grâce au jeu qui existe entre le fourreau 28 et le contour de l'ouverture 38 de la zone d'attache 26. Lorsque la position souhaitée est obtenue, l'opérateur fixe l'ensemble en pivotant l'écrou 31 d'un quart de tour de façon qu'il prenne la position représentée en traits pleins sur les figures 4 et 5, la tôle de la zone 26 étant serrée entre la rondelle 29 et l'écrou 31.

D'autres modes de réalisation sont encore possibles pour l'invention.

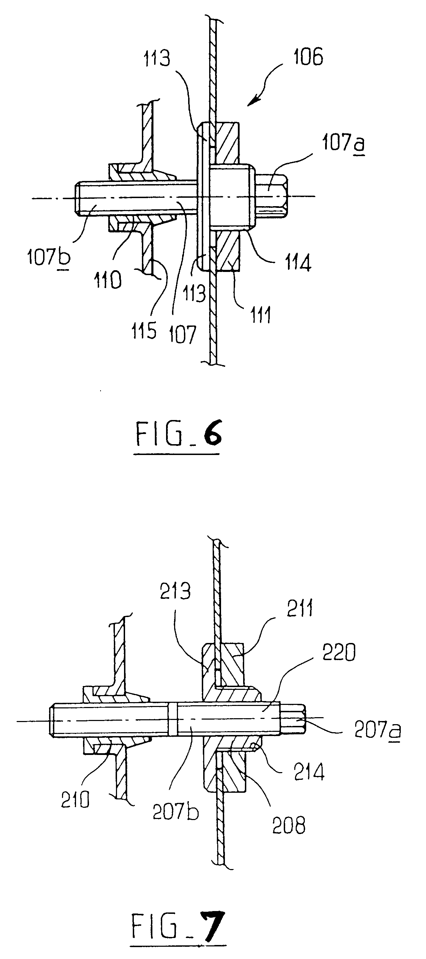

En particulier, une variante de l'ensemble de fixation des figures 2 et 3 a été représentée sur la figure 6. On a repris pour les éléments de cette variante qui se retrouvent sur la variante des figures 2 et 3, les mêmes numérotations de références augmentées de 100.

L'ensemble de fixation représenté sur cette figure 6 diffère principalement de celui des figures 2 et 3 en ce que :
- la vis et le fourreau sont une seule et même pièce 107 présentant une tête 107a, qui se prolonge par une première portion filetée 114, cette première portion filetée 114 étant interposée entre cette tête 107a et une collerette annulaire 113, d'où s'étend le corps 107b fileté de la vis ;
- l'écrou 110 est solidarisé au boîtier par verrouillage élastique ;
- aucune bague en matériau élastomère n'est interposée entre la paroi 115 et la collerette 113.

La mise en oeuvre de cet ensemble est analogue à celle de l'ensemble des figures 2 et 3.

Une autre variante encore de l'ensemble de fixation des figures 2 et 3 a été représentée sur la figure 7.

On a repris pour les éléments de l'ensemble des figures 2 et 3 qui se retrouvent sur cette variante, les mêmes numérotations de références augmentées de 200.

L'ensemble de fixation de cette variante se distingue principalement de celui des figures 2 et 3 en ce que :
- la vis 207 est du type à deux filetages 220 et 221 à pas contraires, le fourreau 208 présentant un filetage coopérant avec le filetage 220 pour maintenir la vis 207 par rapport audit fourreau 208, le filetage 221 coopèrant avec le filetage intérieur de l'écrou 210 ;
- la bague en matériau élastomère y est supprimée ;
- l'écrou 210 est solidarisé au boîtier par verrouillage élastique.

Dans cette variante, un mouvement de rotation de la vis sur elle-même déplace ladite vis simultanément par rapport au boîtier et à la tôle de la carrosserie, selon des mouvements complémentaires qui écartent ou rapprochent les zones d'attache du boîtier et de la tôle.

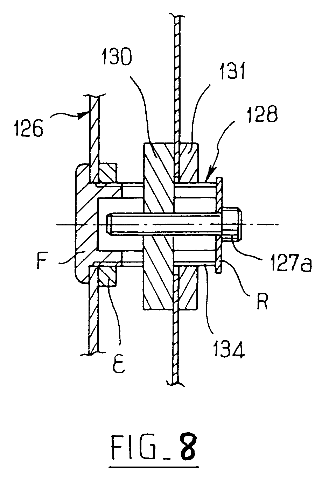

Une variante de l'ensemble de fixation des figures 4 et 5 a encore été représentée sur la figure 8. On a repris pour les éléments de la réalisation des figures 4 et 5, qui se retrouvent sur cette nouvelle variante, les mêmes numérotations de références augmentées de 100.

L'ensemble de fixation représenté sur cette figure 11 se distingue principalement de celui des figures 4 et 5:
- en ce que la tête 127a de la vis 127 ne présente pas de collerette et vient en appui sur une rondelle R interposée entre la tranche du fourreau 128 et ladite tête ;
- en ce que le filetage 134 du fourreau 128 s'étend sur toute la hauteur de celui-ci, ledit fourreau 128 étant solidarisé d'une paroi du boîtier par l'intermédiaire d'un écrou E dont le filetage intérieur coopère avec ledit filetage extérieur 134, ladite paroi du boîtier étant interposée entre ledit écrou et une collerette F qui termine le fourreau 128 à son extrémité opposée à celle sur laquelle vient en appui la rondelle R.

La mise en oeuvre de cet ensemble est analogue à celle de l'ensemble de fixation des figures 4 et 5.

## Revendications

1. Ensemble pour la fixation ajustable d'un dispositif (2) d'éclairage et/ou de signalisation sur la carrosserie (3) d'un véhicule automobile (1), comportant deux éléments (8, 10 ; 28, 30 ; 107, 110 ; 208, 210 ; 128, 130) susceptibles de se déplacer l'un par rapport à l'autre le long d'un axe de coulissement commun, lesdits éléments étant l'un (10, 28, 110, 210, 128) solidaire du dispositif d'éclairage et/ou de signalisation, l'autre (8, 30, 107, 208, 130) fixé sur une tôle de la carrosserie par un organe fileté (14, 34, 114, 214, 134) qui traverse la tôle et qui coopére avec un écrou (11, 31, 111, 211, 131) pour serrer ladite tôle entre ledit écrou et un appui complémentaire, ledit organe fileté (14, 34, 114, 214, 134) traversant ladite tôle avec un jeu qui autorise l'ajustement transversal de la position de l'axe de coulissement desdits éléments par rapport à la tôle de la carrosserie, des moyens permettant de bloquer lesdits éléments l'un par rapport à l'autre dans une position relative correspondant à un ajustement souhaité selon la direction de l'axe de coulissement comportant un écrou (10, 30, 110, 210, 130) coopérant avec un deuxième organe fileté (7, 27, 107, 207, 127) s'étendant selon l'axe de coulissement relatif des deux éléments, caractérisé en ce que l'organe fileté qui traverse avec jeu la tôle est un fourreau (8, 28, 208, 108) qui constitue l'un des éléments ajustables en coulissement, le deuxième organe fileté étant une vis (7, 27, 207, 127) s'étendant axialement par rapport audit fourreau (8, 28, 208, 128), la tête de ladite vis étant en appui sur la tranche dudit fourreau qui est du côté de la tôle opposé au dispositif d'éclairage et/ou de signalisation, le deuxième élément étant un écrou qui coopère avec ladite vis.

2. Ensemble selon la revendication 1, caractérisé en ce que l'organe fileté (8, 107, 213) présente une collerette (13, 113, 213) annulaire extérieure qui constitue l'appui contre lequel le premier écrou (11, 111, 211) serre la tôle.

3. Ensemble selon la revendication 1, caractérisé en ce que l'écrou (10) qui coopère avec la vis (7), est solidarisé d'une paroi du dispositif d'éclairage et/ou de signalisation par serrage de cette paroi entre ledit écrou et une bague élastiquement déformable (9) interposée entre ladite paroi et la collerette d'appui (13) que présente le fourreau (8).

4. Ensemble selon la revendication 1, caractérisé en ce que le fourreau (28, 128) présente au moins deux ouvertures (36) qui s'étendent sur celui-ci parallèlement à l'axe de coulissement, l'écrou (30, 130) qui coopère avec la vis étant conformé pour être maintenu par lesdites ouvertures, de façon qu'un mouvement de rotation de la vis déplace ledit écrou en translation sur le fourreau (28, 128).

5. Ensemble selon la revendication 1, caractérisé en ce que le fourreau (128) présente un filetage extérieur (134) qui s'étend sur une majeure partie de sa hauteur pour coopérer, d'une part, avec le premier écrou (131) et, d'autre part, avec un écrou (E) qui le fixe au dispositif d'éclairage et/ou de signalisation.

6. Ensemble selon la revendication 1, caractérisé en ce que la vis (207) est du type à deux filetages de pas de sens contraires.

7. Ensemble selon l'une des revendications 1 à 6, caractérisé en ce que l'ouverture (18, 38, 118, 218, 138) de la tôle que traverse le premier organe fileté, présente un contour oblong, l'écrou (11, 31, 111, 211, 131) qui coopére avec ledit organe fileté présentant un contour oblong similaire et de dimensions légèrement inférieures.

## Claims

1. A unit for the adjustable attachment of a lighting and/or signalling device (2) to the bodyshell (3) of a motor vehicle (1), comprising two components (8, 10; 28, 30; 107, 110; 208, 210; 128, 130) capable of moving in relation to one another along a common sliding axis, of the said components the one (10, 28, 110, 210, 128) being integral with the lighting and/or signalling device, the other (8, 30, 107, 208, 130) being fixed to a sheet of the bodyshell by a threaded element (14, 34, 114, 214, 134) which passes through the sheet and which cooperates with a nut (11, 31, 111, 211, 131) to clamp the said sheet between the said nut and a complementary support, the said threaded element (14, 34, 114, 214, 134) passing through the said sheet with a clearance which allows the transversal adjustment of the position of the sliding axis of the said components in relation to the sheet of the bodyshell, means enabling the said components to be locked in relation to one another in a relative position corresponding to a desired adjustment along the direction of the sliding axis comprising a nut (10, 30, 110, 210, 130) cooperating with a second threaded element (7, 27, 107, 207, 127) extending along the relative sliding axis of the two components,
**characterised in that** the threaded element which passes through the sheet with clearance is a sleeve (8, 28, 208, 108) which forms the one of the components adjustable by sliding, the second threaded element being a screw (7, 27, 207, 127) extending axially in relation to the said sleeve (8, 28, 208, 128), the head of the said screw resting on the section of the said sleeve which is on the side of the sheet opposite the lighting and/or signalling device, the second component being a nut which cooperates with the said screw.

2. A unit according to Claim 1,
**characterised in that** the threaded element (8, 107, 213) has an exterior annular collar (13, 113, 213) which forms the support against which the first nut (11, 111, 211) clamps the sheet.

3. A unit according to Claim 1,
**characterised in that** the nut (10) which cooperates with the screw (7) is joined to a wall of the lighting and/or signalling device by clamping this wall between the said nut and an elastically deformable ring (9) placed between the said wall and the bearing collar (13) which the sleeve (8) has.

4. A unit according to Claim 1,
**characterised in that** the sleeve (28, 128) has at least two apertures (36) which extend thereon parallel to the sliding axis, the nut (30, 130) which cooperates with the screw being formed to be retained by the said apertures, so that a rotational movement of the screw moves the said nut in translation on the sleeve (28, 128).

5. A unit according to Claim 1,
**characterised in that** the sleeve (128) has an external screw thread (134) which extends over a large part of its height to cooperate, firstly, with the first nut (131) and, secondly, with a nut (E) which attaches it to the lighting and/or signalling device.

6. A unit according to Claim 1,
**characterised in that** the screw (207) is of the type having two screw threads with pitches in opposite directions.

7. A unit according to one of Claims 1 to 6,
**characterised in that** the aperture (18, 38, 118, 218, 138) of the sheet through which the first threaded element passes has an oblong contour, the nut (11, 31, 111, 211, 131) which cooperates with the said threaded element having a similar oblong contour with slightly smaller dimensions.

## Patentansprüche

1. Justierbare Befestigungseinrichtung für eine Beleuchtungs- und/oder Signaleinrichtung (2) eines Kraftfahrzeugs (1), umfassend zwei Elemente (8, 10; 28, 30; 107, 110; 208, 210; 128, 130), die sich im Verhältnis zueinander entlang einer gemeinsamen Gleitachse verschieben können, wobei eines (10, 28, 110, 210, 128) der besagten Elemente fest mit der Beleuchtungs- und/oder Signaleinrichtung verbunden ist, während das andere Element (8, 30, 107, 208, 130) an einem Blech der Karosserie durch ein Gewindeorgan (14, 34, 114, 214, 134) befestigt ist, das durch das Blech hindurchgeht und das mit einer Mutter (11, 31, 111, 211, 131) zusammenwirkt, um das besagte Blech zwischen der besagten Mutter und einer formschlüssigen Auflage einzuspannen, wobei das besagte Gewindeorgan (14, 34, 114, 214, 134) durch das besagte Blech mit einem Spiel hindurchgeht, das die Querjustierung der Position der Gleitachse der besagten Elemente im Verhältnis zum Blech der Karosserie ermöglicht, wobei Mittel zur Sicherung der besagten Elemente im Verhältnis zueinander in einer relativen Position, die einer gewünschten Justierung entlang der Richtung der Gleitachse entspricht, eine Mutter (10, 30, 110, 210, 130) umfassen, die mit einem zweiten Gewindeorgan (7, 27, 107, 207, 127) zusammenwirkt, das sich entlang der relativen Gleitachse der beiden Elemente erstreckt,**dadurch gekennzeichnet**, daß das Gewindeorgan, das mit Spiel durch das Blech hindurchgeht, eine Hülse (8, 28, 208, 108) ist, die eines der gleitend justierbaren Elemente bildet, während das zweite Gewindeorgan eine Schraube (7, 27, 207, 127) ist, die sich axial im Verhältnis zu der besagten Hülse (8, 28, 208, 128) erstreckt, wobei der Kopf der besagten Schraube an der Kante der besagten Hülse anliegt, die sich auf der der Beleuchtungs- und/oder Signaleinrichtung abgewandten Seite befindet, wobei das zweite Element eine Mutter ist, die mit der besagten Schraube zusammenwirkt.

2. Einrichtung nach Anspruch 1, **dadurch gekennzeichnet,** daß das Gewindeorgan (8, 107, 213) einen äußeren ringförmigen Bund (13, 113, 213) aufweist, der die Auflage bildet, an der die erste Mutter (11, 111, 211) das Blech einspannt.

3. Einrichtung nach Anspruch 1, **dadurch gekennzeichnet,** daß die Mutter (10), die mit der Schraube (7) zusammenwirkt, fest mit einer Wand der Beleuchtungs- und/oder Signaleinrichtung durch Einspannung dieser Wand zwischen der besagten Mutter und einem elastisch verformbaren Ring (9) verbunden ist, der zwischen der besagten Wand und dem Auflagebund (13) eingefügt ist, den die Hülse (8) aufweist.

4. Einrichtung nach Anspruch 1**,dadurch gekennzeichnet,** daß die Hülse (28, 128) mindestens zwei Öffnungen (36) aufweist, die sich auf dieser parallel zur Gleitachse erstrecken, wobei die Mutter (30, 130), die mit der Schraube zusammenwirkt, so gestaltet ist, daß sie durch die besagten Öffnungen gehalten wird, so daß eine Drehbewegung der Schraube die besagte Mutter auf der Hülse (28, 128) geradlinig verschiebt.

5. Einrichtung nach Anspruch 1, **dadurch gekennzeichnet,** daß die Hülse (128) ein Außengewinde (134) aufweist, das sich auf einem größeren Teil ihrer Höhe erstreckt, um einerseits mit der ersten Mutter (131) und andererseits mit der Mutter (E) zusammenzuwirken, die sie an der Beleuchtungs- und/oder Signaleinrichtung befestigt.

6. Einrichtung nach Anspruch 1 , **dadurch gekennzeichnet,** daß die Schraube (207) mit zwei gegenläufigen Gewinden ausgeführt ist.

7. Einrichtung nach einem der Ansprüche 1 bis 6, **dadurch gekennzeichnet,** daß die Öffnung (18, 38, 118, 218, 138) des Blechs, durch die das erste Gewindeorgan hindurchgeht, einen länglichen Umriß aufweist, während die Mutter (11, 31, 111, 211, 131), die mit dem besagten Gewindeorgan zusammenwirkt, einen ähnlichen länglichen Umriß mit etwas kleineren Abmessungen aufweist.
